(19) Europäisches Patentamt
European Patent Office
Office européen des brevets

(11) **EP 1 536 411 B1**

(12) **EUROPEAN PATENT SPECIFICATION**

(45) Date of publication and mention
of the grant of the patent:
**27.06.2007 Bulletin 2007/26**

(51) Int Cl.:
***G10L 11/00*** *(2006.01)*

(21) Application number: **04025456.7**

(22) Date of filing: **26.10.2004**

(54) **Method for continuous valued vocal tract resonance tracking using piecewise linear approximations**

Verfahren zur kontinuierlichwertigen Vokaltraktresonanzverfolgung unter Verwendung von stückweisen linearen Annäherungen

Procédé pour suivre les résonances du conduit vocal utilisant des approximations linéaires par morceaux

(84) Designated Contracting States:
**AT BE BG CH CY CZ DE DK EE ES FI FR GB GR HU IE IT LI LU MC NL PL PT RO SE SI SK TR**

(30) Priority: **26.11.2003 US 723995**

(43) Date of publication of application:
**01.06.2005 Bulletin 2005/22**

(73) Proprietor: **MICROSOFT CORPORATION**
**Redmond, Washington 98052 (US)**

(72) Inventors:
• **Acero, Alejandro,**
**c/o Microsoft Corporation**
**Redmond**
**Washington 98052 (US)**
• **Attias, Hagai,**
**c/o Microsoft Corporation**
**Redmond**
**Washington 98032 (US)**
• **Lee, Leo J.,**
**c/o Microsoft Corporation**
**Redmond**
**Washington 98052 (US)**
• **Deng, Li,**
**c/o Microsoft Corporation**
**Redmond**
**Washington 98052 (US)**

(74) Representative: **Grünecker, Kinkeldey,**
**Stockmair & Schwanhäusser**
**Anwaltssozietät**
**Maximilianstrasse 58**
**80538 München (DE)**

(56) References cited:
**US-B1- 6 505 152**

• **RIGOLL G: "Formant tracking with quasilinearization" 1988 INTERNATIONAL CONFERENCE ON ACOUSTICS, SPEECH, AND SIGNAL PROCESSING ICASSP, 11 April 1988 (1988-04-11), pages 306-310, XP010072810**
• **DENG L ET AL: "Tracking vocal tract resonances using an analytical nonlinear predictor and a target-guided temporal constraint" PROC. OF EUROSPEECH 2003, September 2003 (2003-09), pages 73-76, XP002305040**
• **LI DENG ET AL: "A structured speech model with continuous hidden dynamics and prediction-residual training for tracking vocal tract resonances" 2004 IEEE INTERNATIONAL CONFERENCE ON ACOUSTICS, SPEECH, AND SIGNAL PROCESSING IEEE PISCATAWAY, NJ, USA, vol. 1, 17 May 2004 (2004-05-17), pages 557-560, XP002306580 ISBN: 0-7803-8484-9**

**Description**

BACKGROUND OF THE INVENTION

The present invention relates to speech recognition systems and in particular to speech recognition systems that exploit vocal tract resonances in speech.

In human speech, a great deal of information is contained in the first three or four resonant frequencies of the speech signal. In particular, when a speaker is pronouncing a vowel, the frequencies (and to a less extent, bandwidths) of these resonances indicate which vowel is being spoken.

Such resonant frequencies and bandwidths are often referred to collectively as formants. During sonorant speech, which is typically voiced, formants can be found as spectral prominences in a frequency representation of the speech signal. However, during non-sonorant speech, the formants cannot be found directly as spectral prominences. Because of this, the term "formants" has sometimes been interpreted as only applying to sonorant portions of speech. To avoid confusion, some researchers use the phrase "vocal tract resonance" to refer to formants that occur during both sonorant and non-sonorant speech. In both cases, the resonance is related to only the oral tract portion of the vocal tract.

To detect formants, systems of the prior art analyzed the spectral content of a frame of the speech signal. Since a formant can be at any frequency, the prior art has attempted to limit the search space before identifying a most likely formant value. Under some systems of the prior art, the search space of possible formants is reduced by identifying peaks in the spectral content of the frame. Typically, this is done by using linear predictive coding (LPC) which attempts to find a polynomial that represents the spectral content of a frame of the speech signal. Each of the roots of this polynomial represents a possible resonant frequency in the signal and thus a possible formant. Thus, using LPC, the search space is reduced to those frequencies that form roots of the LPC polynomial.

In other formant tracking systems of the prior art, the search space is reduced by comparing the spectral content of the frame to a set of spectral templates in which formants have been identified by an expert. The closest "n" templates are then selected and used to calculate the formants for the frame. Thus, these systems reduce the search space to those formants associated with the closest templates.

In the document "Formant Tracking with Quasilinearization" (G. Rigoll, 1988 International Conference on Acoustics, Speech, and Signal Processing ICASSP, 11 April 1988, pages 306 - 310), a new algorithm for the calculation of formant tracks from a speech signal is presented. It is based on the method of quasilinearization, a nonlinear parameter estimation procedure. Since the algorithm derives directly formants by means of a parameter estimation procedure, it relies on a model for speech production which has directly the formants as parameters.

One system of the prior art, developed by the same inventors as the present invention, used a consistent search space that was the same for each frame of an input signal. Each set of formants in the search space was mapped into a feature vector. Each of the feature vectors was then applied to a model to determine which set of formants was most likely.

This system works well but is computationally expensive because it typically utilizes Mel-Frequency Cepstral Coefficient frequency vectors, which require the application of a set of frequencies to a complex filter that is based on all of the formants in the set of formants that is being mapped followed by a windowing step and a discrete cosine transform step in order to map the formants into the feature vectors. This computation was too time-consuming to be performed at run time and thus all of the sets of formants had to be mapped before run time and the mapped feature vectors had to be stored in a large table. This is less than ideal because it requires a substantial amount of memory to store all of the mapped feature vectors.

In another system developed by the present inventors, a set of discrete vocal tract resonance vectors are stored in a codebook. Each of the discrete vectors is converted into a simulated feature vector that is compared to an input feature vector to determine which discrete vector best represents an input speech signal. This system is less than ideal because it does not determine continuous values for the vocal tract resonance vectors but instead selects one of the discrete vocal tract resonance codewords. Discretized vocal tract resonance vectors are disclosed in Deng L et al: "Tracking vocal tract resonances using an analytical nonlinear predictor and a target-guided temporal constraint", Proc. of Eurospeech 2003, pages 73-76.

SUMMARY OF THE INVENTION

The invention provides a method of tracking vocal tract resonance frequency in a speech signal according to claim 1 and a corresponding computer-readable medium.

A method and apparatus tracks vocal tract resonance components in a speech signal. The components are tracked by defining a state equation that is linear with respect to a past vocal tract resonance vector and that predicts a current vocal tract resonance vector. An observation equation is also defined that is linear with respect to a current vocal tract resonance vector and that predicts at least one component of an observation vector. The state equation, the observation equation, and a sequence of observation vectors are used to identify a sequence of vocal tract resonance vectors. Under one embodiment, the observation equation is defined based on a linear approximation to a non-linear function. The parameters of the linear approximation are selected based on an estimate of a vocal tract resonance vector.

BRIEF DESCRIPTION OF THE DRAWINGS

FIG. 1 is a block diagram of a general computing environment in which embodiments of the present invention may be practiced.

FIG. 2 is a graph of the magnitude spectrum of a speech signal.

FIG. 3 is a diagram showing a piecewise linear approximation to an exponential function.

FIG. 4 is a diagram showing a piecewise linear approximation to a sinusoidal function.

FIG. 5 is a flow diagram of a method under the present invention.

FIG. 6 is a block diagram of a training system for training a residual model.

FIG. 7 is a block diagram of a formant tracking system under one embodiment of the present invention.

DETAILED DESCRIPTION OF ILLUSTRATIVE EMBODIMENTS

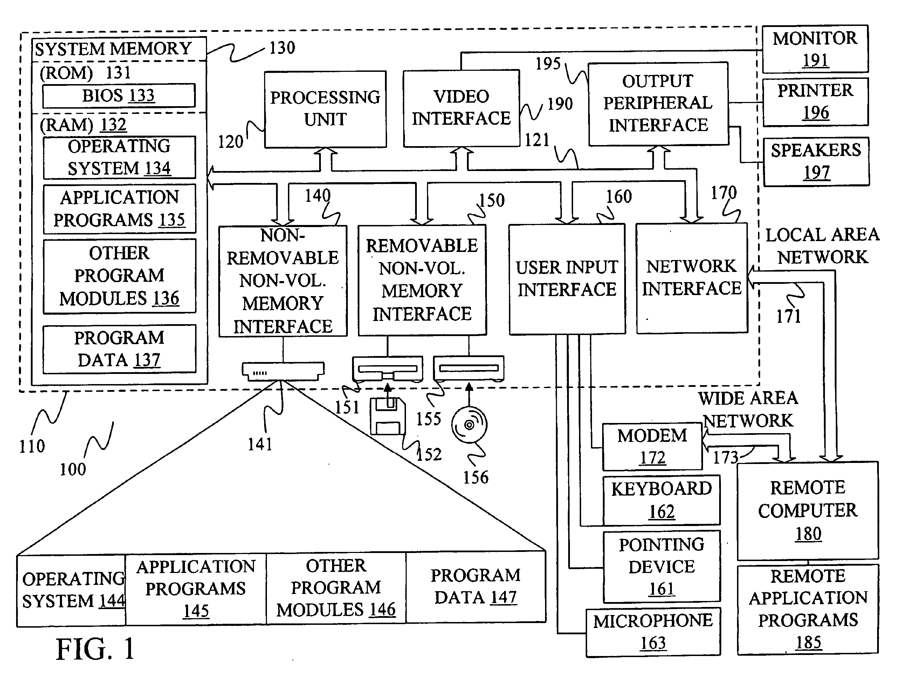

FIG. 1 illustrates an example of a suitable computing system environment 100 on which the invention may be implemented. The computing system environment 100 is only one example of a suitable computing environment and is not intended to suggest any limitation as to the scope of use or functionality of the invention. Neither should the computing environment 100 be interpreted as having any dependency or requirement relating to any one or combination of components illustrated in the exemplary operating environment 100.

The invention is operational with numerous other general purpose or special purpose computing system environments or configurations. Examples of well-known computing systems, environments, and/or configurations that may be suitable for use with the invention include, but are not limited to, personal computers, server computers, hand-held or laptop devices, multiprocessor systems, microprocessor-based systems, set top boxes, programmable consumer electronics, network PCs, minicomputers, mainframe computers, telephony systems, distributed computing environments that include any of the above systems or devices, and the like.

The invention may be described in the general context of computer-executable instructions, such as program modules, being executed by a computer. Generally, program modules include routines, programs, objects, components, data structures, etc. that perform particular tasks or implement particular abstract data types. The invention is designed to be practiced in distributed computing environments where tasks are performed by remote processing devices that are linked through a communications network. In a distributed computing environment, program modules are located in both local and remote computer storage media including memory storage devices.

With reference to FIG. 1, an exemplary system for implementing the invention includes a general-purpose computing device in the form of a computer 110. Components of computer 110 may include, but are not limited to, a processing unit 120, a system memory 130, and a system bus 121 that couples various system components including the system memory to the processing unit 120. The system bus 121 may be any of several types of bus structures including a memory bus or memory controller, a peripheral bus, and a local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus also known as Mezzanine bus.

Computer 110 typically includes a variety of computer readable media. Computer readable media can be any available media that can be accessed by computer 110 and includes both volatile and nonvolatile media, removable and non-removable media. By way of example, and not limitation, computer readable media may comprise computer storage media and communication media. Computer storage media includes both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computer 110. Communication media typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer readable media.

The system memory 130 includes computer storage media in the form of volatile and/or nonvolatile memory such as read only memory (ROM) 131 and random access memory (RAM) 132. A basic input/output system 133 (BIOS), containing the basic routines that help to transfer information between elements within computer 110, such as during start-up, is typically stored in ROM 131. RAM 132 typically contains data and/or program modules that are immediately accessible to and/or presently being operated on by processing unit 120. By way of example, and not limitation, FIG. 1 illustrates operating system 134, application programs 135, other program modules 136, and program data 137.

The computer 110 may also include other removable/non-removable volatile/nonvolatile computer storage media. By way of example only, FIG. 1 illustrates a hard disk drive 141 that reads from or writes to non-removable, nonvolatile magnetic media, a magnetic disk drive 151 that reads from or writes to a removable, nonvolatile magnetic disk 152, and an optical disk drive 155 that reads from or writes to a removable, nonvolatile optical disk 156 such as a CD ROM or other optical media. Other removable/non-removable, volatile/nonvolatile computer storage media that can be used in the exemplary operating environment include, but are not limited to, magnetic tape cassettes, flash memory cards, digital versatile disks, digital video tape, solid state RAM, solid state ROM, and the like. The hard disk drive 141 is typically connected to the system bus 121 through a non-removable memory interface such as interface 140, and magnetic disk drive 151 and optical disk drive 155 are typically connected to the system bus 121 by a removable memory interface, such as interface 150.

The drives and their associated computer storage media discussed above and illustrated in FIG. 1, provide storage of computer readable instructions, data structures, program modules and other data for the computer 110. In FIG. 1, for example, hard disk drive 141 is illustrated as storing operating system 144, application programs 145, other program modules 146, and program data 147. Note that these components can either be the same as or different from operating system 134, application programs 135, other program modules 136, and program data 137. Operating system 144, application programs 145, other program modules 146, and program data 147 are given different numbers here to illustrate that, at a minimum, they are different copies.

A user may enter commands and information into the computer 110 through input devices such as a keyboard 162, a microphone 163, and a pointing device 161, such as a mouse, trackball or touch pad. Other input devices (not shown) may include a joystick, game pad, satellite dish, scanner, or the like. These and other input devices are often connected to the processing unit 120 through a user input interface 160 that is coupled to the system bus, but may be connected by other interface and bus structures, such as a parallel port, game port or a universal serial bus (USB). A monitor 191 or other type of display device is also connected to the system bus 121 via an interface, such as a video interface 190. In addition to the monitor, computers may also include other peripheral output devices such as speakers 197 and printer 196, which may be connected through an output peripheral interface 195.

The computer 110 is operated in a networked environment using logical connections to one or more remote computers, such as a remote computer 180. The remote computer 180 may be a personal computer, a hand-held device, a server, a router, a network PC, a peer device or other common network node, and typically includes many or all of the elements described above relative to the computer 110. The logical connections depicted in FIG. 1 include a local area network (LAN) 171 and a wide area network (WAN) 173, but may also include other networks. Such networking environments are commonplace in offices, enterprise-wide computer networks, intranets and the Internet.

When used in a LAN networking environment, the computer 110 is connected to the LAN 171 through a network interface or adapter 170. When used in a WAN networking environment, the computer 110 typically includes a modem 172 or other means for establishing communications over the WAN 173, such as the Internet. The modem 172, which may be internal or external, may be connected to the system bus 121 via the user input interface 160, or other appropriate mechanism. In a networked environment, program modules depicted relative to the computer 110, or portions thereof, may be stored in the remote memory storage device. By way of example, and not limitation, FIG. 1 illustrates remote application programs 185 as residing on remote computer 180. It will be appreciated that the network connections shown are exemplary and other means of establishing a communications link between the computers may be used.

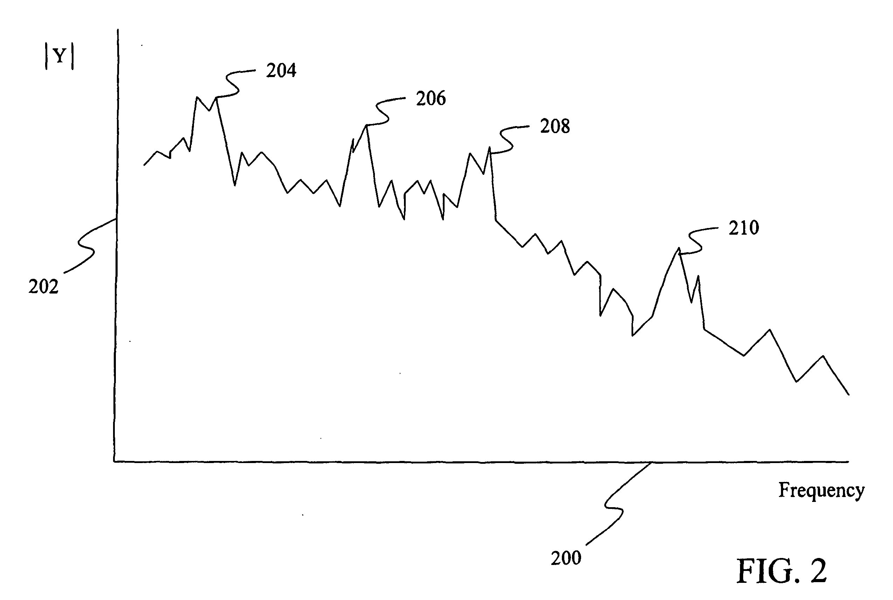

FIG. 2 is a graph of the frequency spectrum of a section of human speech. In FIG. 2, frequency is shown along horizontal axis 200 and the magnitude of the frequency components is shown along vertical axis 202. The graph of FIG. 2 shows that sonorant human speech contains resonances or formants, such as first formant 204, second formant 206, third formant 208, and fourth formant 210. Each formant is described by its center frequency, F, and its bandwidth, B.

The present invention provides methods for identifying the formant frequencies and bandwidths in a speech signal across a continuous range of formant frequencies and bandwidths, both in sonorant and non-sonorant speech. Thus, the invention is able to track vocal tract resonance frequencies and bandwidths.

To do this, the present invention models the hidden vocal tract resonance frequencies and bandwidths as a sequence of hidden states that each produces an observation. In one particular embodiment, the hidden vocal tract resonance frequencies and bandwidths are modeled using a state equation of:

$$\mathbf{x}_t = \Phi\mathbf{x}_{t-1} + (\mathbf{I} - \Phi)\mathbf{T} + \mathbf{w}_t \qquad\qquad \text{EQ. 1}$$

and an observation equation of:

$$\mathbf{o}_t = C(\mathbf{x}_t) + \mathbf{v}_t \qquad\qquad \text{EQ. 2}$$

where x, is a hidden vocal tract resonance vector at time t consisting of $x_t = \{f_1, b_1, f_2, b_2, f_3, b_3, f_4, b_4\}$, $\mathbf{x}_{t-1}$ is a hidden vocal tract resonance vector at a previous time t-1, $\Phi$ is a system matrix, $\mathbf{I}$ is the identity matrix, $\mathbf{T}$ is a target vector for the vocal tract resonance frequencies and bandwidths, $\mathbf{w}_t$ is noise in the state equation, o, is an observed vector, $C(\mathbf{x}_t)$ is a mapping function from the hidden vocal tract resonance vector to an observation vector, and $\mathbf{v}_t$ is the noise in the observation. Under one embodiment, $\Phi$ is a diagonal matrix with each entry having a value between 0.7 and 0.9 that has been empirically determined, and $T$ is a vector, which, in one embodiment, has a value of:

(500 1500 2500 3500 200 300 400 400)$^T$

Under this embodiment, the noise parameters $\mathbf{w}_t$ and $\mathbf{v}_t$ have values determined by random Gaussian samples with a zero mean vector and with diagonal covariance matrices. The diagonal elements of these matrices in this embodiment have values between 10 and 30,000 for $\mathbf{w}_t$, and values between 0.8 and 78 for $\mathbf{v}_t$.

Under one embodiment, the observed vector is a Linear Predictive Coding-Cepstra (LPC-cepstra) vector where each component of the vector represents an LPC order. As a result, the mapping function $C(\mathbf{x}_t)$ can be determined precisely by an analytical nonlinear function. The nth component of the vector-valued function $C(\mathbf{x}_t)$ for frame t is:

$$C_n(\mathbf{x}_t) = \sum_{k=1}^{K} \frac{2}{n} e^{-\pi n \frac{b_k(t)}{f_s}} \cos(2\pi n \frac{f_k(t)}{f_s}) \qquad\qquad \text{EQ. 3}$$

where $C_n(\mathbf{x}_t)$ is the nth element in an Nth order LPC-Cepstrum feature vector, K is the number of vocal tract resonance (VTR) frequencies, $f_k(t)$ is the kth VTR frequency for frame t, $b_k(t)$ is the kth VTR bandwidth for frame t, and $f_s$ is the sampling frequency, which in many embodiments is 8 kHz and in other embodiments is 16 kHz. The $C_0$ element is set equal to log$G$, where G is a gain.

To identify a sequence of hidden vocal tract resonance vectors from a sequence of observation vectors, the present invention uses a Kalman filter. A Kalman filter provides a recursive technique that can determine a best estimate of the continuous-valued hidden vocal tract resonance vectors in the linear dynamic system represented by Equations 1 and 2. Such Kalman filters are well known in the art.

The Kalman filter requires that the righthand side of Equations 1 and 2 be linear with respect to the hidden vocal tract resonance vector. However, the mapping function of Equation 3 is non-linear with respect to the vocal tract resonance vector. To address this, the present invention uses piecewise linear approximations in place of the exponent and cosine terms in Equation 3. Under one embodiment, the exponent term is represented by five linear regions and the cosine term is represented by ten linear regions.

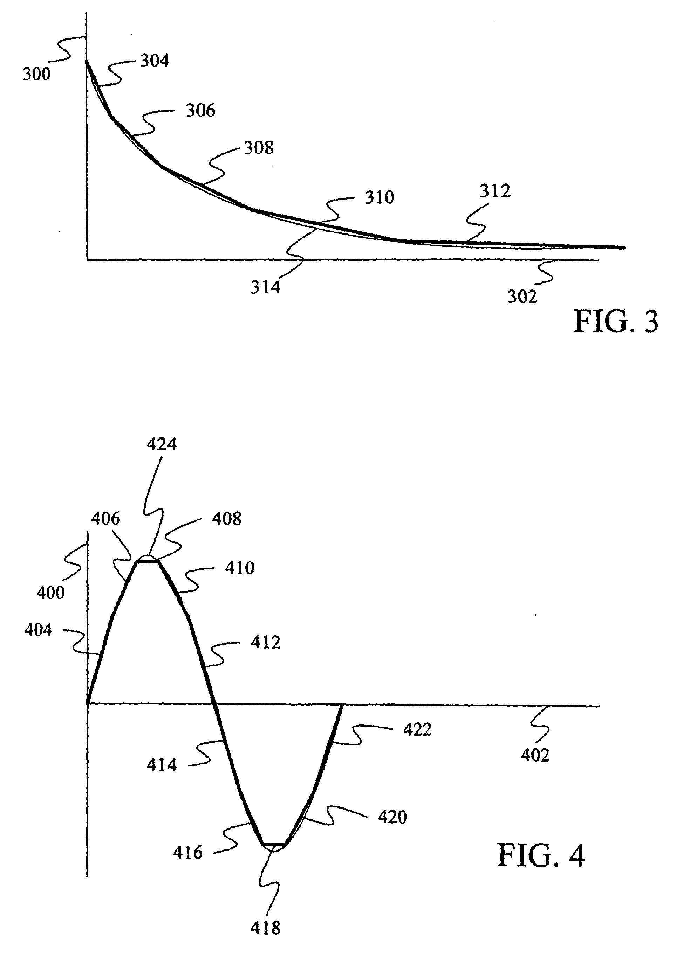

FIG. 3 shows an example of a piecewise linear approximation to the exponent term in Equation 3. The value of the exponent is shown along vertical axis 300 and the value of bandwidth $b_k$ for the kth VTR bandwidth is shown along horizontal axis 302. In FIG. 3, five linear segments 304, 306, 308, 310 and 312 are used to approximate exponent graph 314. The following table provides ranges of exponent values that each of the linear segments cover.

Table 1

| Linear Segment | Range Of Exponent Values |
| --- | --- |
| 304 | 0 - 100 Hz |
| 306 | 100 - 200 Hz |
| 308 | 200 - 300 Hz |
| 310 | 300 - 400 Hz |
| 312 | 400 - 500 Hz |

FIG. 4 shows an example of a piecewise linear approximation to the cosine term in Equation 3. The value of the cosine function is shown along vertical axis 400 and the value of frequency $f_k$ for the $k$th VTR frequency is shown along horizontal axis 402. In FIG. 4, a single cycle of the cosine function is shown, however, those skilled in the art will recognize that the same piecewise linear approximations can be used for each cycle of the cosine function. Under the embodiment of FIG. 4, the cosine function 424 is approximated by ten linear segments 404, 406, 408, 410, 412, 414, 416, 418, 420 and 422. Table 2 below provides the non-uniform range of cosine values covered by each linear segment, assuming that the full cycle covers the frequency range from 0 Hz to 8000 Hz.

Table 2

| Linear Segment | Range of Cosine Values |
| --- | --- |
| 404 | 0 - 500 Hz |
| 406 | 500 - 1000 Hz |
| 408 | 1000 - 3000 Hz |
| 410 | 3000 - 3500 Hz |
| 412 | 3500 - 4000 Hz |
| 414 | 4000 - 4500 Hz |
| 416 | 4500 - 5000 Hz |
| 418 | 5000 - 7000 Hz |
| 420 | 7000 - 7500 Hz |
| 422 | 7500 - 8000 Hz |

Using these linear approximations, Equation 3 is rewritten as:

$$C_n(\mathbf{x}_t) = \sum_{k=1}^{K} \frac{2}{n}(\alpha_{kx}\mathbf{x}_t + \beta_{kx})(\gamma_{kx}\mathbf{x}_t + \delta_{kx}) \qquad \text{EQ. 4}$$

where $\alpha_{kx}$ is the slope and $\beta_{kx}$ is the intercept of the linear segment that approximates the exponent term and $\gamma_{kx}$ is the slope and $\delta_{kx}$ is the intercept of the linear segment that approximates the cosine term. Note that all four terms are dependent on $\mathbf{x}_t$ because the linear segments that are used to approximate the non-linear functions are selected based on the region determined by the value of $\mathbf{x}_t$ according to Tables 1 and 2.

The form of the mapping function in Equation 4 is still not linear in $\mathbf{x}_t$ because of the quadratic term. Under one embodiment of the present invention, the incremental portion of this term is ignored, resulting in a linear equation from $\mathbf{x}_t$ to $C_n(x_t)$.

In this form, as long as the parameters are fixed based on the regions of the segment exemplified in Tables 1 and 2, a Kalman Filter is applied directly to obtain the sequence of continuous valued states $\mathbf{x}_{1:T}$ from a sequence of observed LPC feature vectors $\mathbf{o}_{1:T}$.

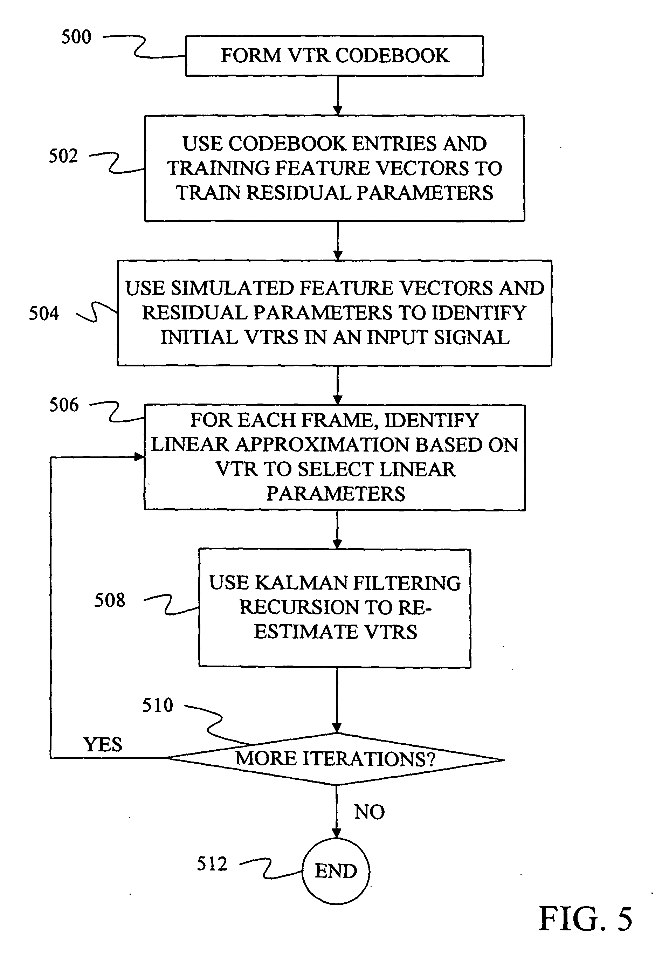

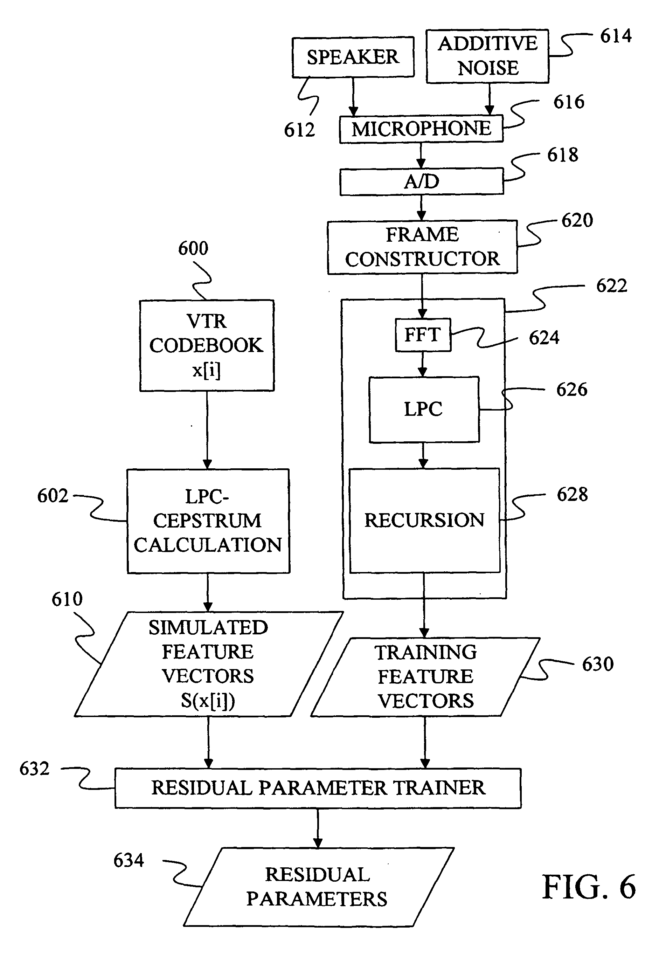

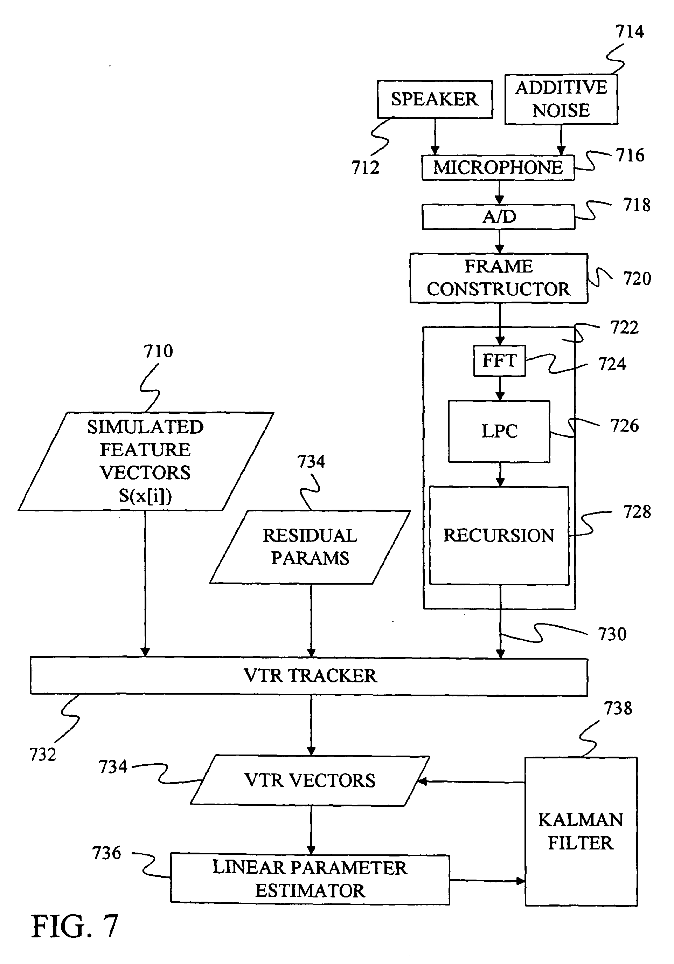

FIG. 5 provides a general flow diagram of a method of selecting linear approximations and using the approximation in a Kalman Filter to identify a sequence of continuous valued states using Equations 1, 2 and 4 while ignoring the incremental portion of the quadratic term in Equation 4. FIGS. 6 and 7 provide block diagrams of components used in the method of FIG. 5.

In step 500 of FIG. 5, a vocal tract resonance (VTR) codebook, stored in a table, is constructed by quantizing the possible VTR frequencies and bandwidths to form a set of quantized values and then forming entries for different combinations of the quantized values. Thus, the resulting codebook contains entries that are vectors of VTR frequencies and bandwidths. For example, if the codebook contains entries for four VTRs, the $ith$ entry x[i] in the codebook would be a vector of $[F_{1i}, B_{1i}, F_{2i}, B_{2i}, F_{3i}, B_{3i}, F_{4i}, B_{4i}]$ where $F_{1i}$, $F_{2i}$, $F_{3i}$, and $F_{4i}$ are the frequencies of the first, second, third and fourth VTRs and $B_{1i}$, $B_{2i}$, $B_{3i}$, and $B_{4i}$ are the bandwidths for the first, second, third and fourth VTRs. In the discussion below, the index to the codebook, i, is used interchangeably with the value stored at that index, x[i]. When the index is used alone below, it is intended to represent the value stored at that index.

Under one embodiment, the formants and bandwidths are quantized according to the entries in Table 3 below, where Min(Hz) is the minimum value for the frequency or bandwidth in Hertz, Max(Hz) is the maximum value in Hertz, and "Num. Quant." is the number of quantization states. For the frequencies and the bandwidths, the range between the minimum and maximum is divided by the number of quantization states to provide the separation between each of the quantization states. For example, for bandwidth $B_1$ in Table 3, the range of 260 Hz is evenly divided by the 5 quantization states such that each state is separated from the other states by 65 Hz. (i.e., 40, 105, 170, 235, 300).

Table 3.

|  | Min(Hz) | Max(Hz) | Num. Quant. |
|---|---|---|---|
| $F_1$ | 200 | 900 | 20 |
| $F_2$ | 600 | 2800 | 20 |
| $F_3$ | 1400 | 3800 | 20 |
| $F_4$ | 1700 | 5000 | 20 |
| $B_1$ | 40 | 300 | 5 |
| $B_2$ | 60 | 300 | 5 |
| $B_3$ | 60 | 500 | 5 |
| $B_4$ | 100 | 700 | 5 |

The number of quantization states in Table 3 could yield a total of more than 100 million different sets of VTRs. However, because of the constraint $F_1 < F_2 < F_3 < F_4$ there are substantially fewer sets of VTRs in the codebook.

After the codebook has been formed, the entries in the codebook are used to train parameters that describe a residual random variable at step 502. The residual random variable is the difference between a set of observation training feature vectors and a set of simulated feature vectors. In terms of an equation:

$$v_t = o_t - S(x_t[i]) \qquad \text{EQ. 5}$$

where $v_t$ is the residual, $o_t$ is the observed training feature vector at time t and $S(x_t[i])$ is a simulated feature vector.

As shown in FIG. 6, the simulated feature vectors $S(x_t[i])$ 610 are constructed when needed by applying a set of VTRs $x_t[i]$ in VTR codebook 600 to an LPC-Cepstrum calculator 602, which performs the following calculation:

$$S_n(x_t[i]) = \sum_{k=1}^{K} \frac{2}{n} e^{-\pi n \frac{b_k[i]}{f_s}} \cos(2\pi n \frac{f_k[i]}{f_s}) \qquad \text{EQ. 6}$$

where $S_n(x_t[i])$ is the nth element in an nth order LPC-Cepstrum feature vector, K is the number of VTRs, $f_k$ is the kth VTR frequency, $b_k$ is the kth VTR bandwidth, and $f_s$ is the sampling frequency, which in many embodiments is 8 kHz. The $S_0$ element is set equal to $\log G$, where G is a gain.

To produce the observed training feature vectors $o_t$ used to train the residual model, a human speaker 612 generates an acoustic signal that is detected by a microphone 616, which also detects additive noise 614. Microphone 616 converts the acoustic signals into an analog electrical signal that is provided to an analog-to-digital (A/D) converter 618. The analog signal is sampled by A/D converter 618 at the sampling frequency $f_s$ and the resulting samples are converted into digital values. In one embodiment, A/D converter 618 samples the analog signal at 8 kHz with 16 bits per sample, thereby creating 16 kilobytes of speech data per second. In other embodiments, A/D converter 68 samples the analog signal at 16kHz. The digital samples are provided to a frame constructor 620, which groups the samples into frames. Under one embodiment, frame constructor 620 creates a new frame every 10 milliseconds that includes 25 milliseconds worth of data.

The frames of data are provided to an LPC-Cepstrum feature extractor 622, which converts the signal to the frequency domain using a Fast Fourier Transform (FFT) 624 and then identifies a polynomial that represents the spectral content of a frame of the speech signal using an LPC coefficient system 626. The LPC coefficients are converted into LPC cepstrum coefficients using a recursion 628. The output of the recursion is a set of training feature vectors 630 representing the training speech signal.

The simulated feature vectors 610 and the training feature vectors 630 are provided to residual trainer 632 which trains the parameters for the residual $v_t$.

Under one embodiment, $v_t$ is a single Gaussian with mean $h$ and a precision $D$, where $h$ is a vector with a separate mean for each component of the feature vector and $D$ is a diagonal precision matrix with a separate value for each component of the feature vector.

These parameters are trained using an Expectation-Maximization (EM) algorithm under one embodiment of the present invention. During the E-step of this algorithm, a posterior probability $\gamma_t(i) = p(x_t[i]|o_1^N)$ is determined. Under one embodiment, this posterior is determined using a backward-forward recursion defined as:

$$\gamma_t(i) = \frac{\rho_t(i)\sigma_t(i)}{\sum_i \rho_t(i)\sigma_t(i)} \qquad \text{EQ. 7}$$

where $\rho_t(i)$ and $\sigma_t(i)$ are recursively determined as:

$$\rho_t(i) = \sum_j \rho_{t-1}(j)p(x_t[i]|x_{t-1}[j])p(o_t|x_t[i]=x[i]) \qquad \text{EQ. 8}$$

$$\sigma_t(i) = \sum_j \sigma_{t+1}(j)p(x_t[i]|x_{t+1}[j])p(o_t|x_t[i]=x[i]) \qquad \text{EQ. 9}$$

Under one aspect of the invention, the transition probabilities $p(x_t[i]|x_{t-1}[j])$ and $p(x_t[i]|x_{t+1}[j])$ are determined using Equation 1 above, which is repeated here for convenience using the codebook index notation:

$$\mathbf{x}_t[i] = \mathbf{\Phi}\mathbf{x}_{t-1}[i] + (\mathbf{I} - \mathbf{\Phi})\mathbf{T} + \mathbf{w}_t \qquad \text{EQ. 10}$$

where $x_t[i]$ is the value of the VTRs at frame t, $x_{t-1}[j]$ is the value of the VTRs at previous frame t-1, $\Phi$ is a rate, $\boldsymbol{T}$ is a target for the VTRs associated with frame t and $w_t$ is the noise at frame t, which in one embodiment is assumed to be a zero-mean Gaussian with a precision matrix $\boldsymbol{B}$.

Using this dynamic model, the transition probabilities can be described as Gaussian functions:

$$p(x_t[i]|x_{t-1}[j]) = N(x_t[i]; \mathbf{\Phi}\mathbf{x}_{t-1}[i] + (\mathbf{I} - \mathbf{\Phi})\mathbf{T}, B) \qquad \text{EQ. 11}$$

$$p(x_t[i]|x_{t+1}[j]) = N(x_{t+1}[i]; \mathbf{\Phi}\mathbf{x}_t[i] + (\mathbf{I} - \mathbf{\Phi})\mathbf{T}, B) \qquad \text{EQ. 12}$$

Alternatively, the posterior probability $\gamma_t(i) = p(x_t[i]|o_1^N)$ may be estimated by making the probability only dependent on the current observation vector and not the sequence of vectors such that the posterior probability becomes:

$$\gamma_t(i) \approx p(x_t[i]|o_t) \qquad \text{EQ. 13}$$

which can be calculated as:

$$p(x_t[i] \mid o_t) = \frac{N(o_t; S(x_t[i]) + \hat{h}, \hat{D})}{\sum_{i-1}^{I} N(o_t; S(x_t[i]) + \hat{h}, \hat{D})} \qquad EQ. \ 14$$

where $\hat{h}$ is the mean of the residual and $\hat{D}$ is the precision of the residual as determined from a previous iteration of the EM algorithm or as initially set if this is the first iteration.

After the E-step is performed to identify the posterior probability $\gamma_t(i) = p(x_t[i] \mid o_1^N)$, an M-step is performed to determine the mean $h$ and each diagonal element $d^{-1}$ of the variance $D^{-1}$ (the inverse of the precision matrix) of the residual using:

$$\hat{h} = \frac{\sum_{t=1}^{N} \sum_{i-1}^{I} \gamma_t(i)\{o_t - S(x_t[i])\}}{N} \qquad EQ. \ 15$$

$$\hat{d}^{-1} = \frac{\sum_{t=1}^{N} \sum_{i-1}^{I} \gamma_t(i)\{o_t - S(x_t[i]) - \hat{h}\}^2}{N} \qquad EQ. \ 16$$

where $N$ is the number of frames in the training utterance, $I$ is the number of quantization combinations for the VTRs, $o_t$ is the observed feature vector at time t and $S(x_t[i])$ is a simulated feature vector for VTRs $x_t[i]$.

Residual trainer 632 updates the mean and variance multiple times by iterating the E-step and the M-step, each time using the mean and variance from the previous iteration. After the mean and variance reach stable values, they are stored as residual parameters 634.

Once residual parameters 634 have been constructed they can be used in step 504 of FIG. 5 to identify VTR vectors in an input speech signal. A block diagram of a system for identifying VTR vectors is shown in FIG. 7.

In FIG. 7, a speech signal is generated by a speaker 712. The speech signal and additive noise 714 are converted into a stream of feature vectors 730 by a microphone 716, A/D converter 718, frame constructor 720, and feature extractor 722, which consists of an FFT 724, LPC system 726, and a recursion 728. Note that microphone 716, A/D converter 718, frame constructor 720 and feature extractor 722 operate in a similar manner to microphone 616, A/D converter 618, frame constructor 620 and feature extractor 622 of FIG. 6.

The stream of feature vectors 730 is provided to a VTR tracker 732 together with residual parameters 634 and simulated feature vectors 610. VTR tracker 732 uses dynamic programming to identify a sequence of most likely VTR vectors 734. In particular, it utilizes a Viterbi decoding algorithm where each node in the trellis diagram has an optimal partial score of:

$$\delta_t(i) = \max_{x[i]_1^{t-1}} \prod_{\tau=1}^{t-1} p(o_\tau \mid x_\tau[i]) p(o_t \mid x_t[i] = x[i])$$

$$\times p(x[i]_1) \prod_{\tau=2}^{t-1} p(x_\tau[i] \mid x_{\tau-1}[i]) p(x_t[i] = x[i] \mid x_{t-1}[i])$$

$$EQ. \ 17$$

Based on the optimality principle, the optimal partial likelihood at the processing stage of t+1 can be computed using the following Viterbi recursion:

$$\delta_{t+1}(i) = \max_{i'} \delta_t(i') p(x_{t+1}[i] = x[i] \mid x_t[i] = x[i']) p(o_{t+1} \mid x_{t+1}[i] = x[i])$$

EQ. 18

In Equation 18, the "transition" probability $p(x_{t+1}[i]=x[i]|x_t[i]=x[i'])$ is calculated using state Equation 10 above to produce a Gaussian distribution of:

$$p(x_{t+1}[i] = x[i] \mid x_t[i] = x[i']) = N(x_{t+1}[i]; \mathbf{\Phi}\mathbf{x}_t[i'] + (\mathbf{I} - \mathbf{\Phi})\mathbf{T}, B)$$

EQ. 19

where $\mathbf{\Phi}\mathbf{x}_t[i]+(\mathbf{I}-\mathbf{\Phi})\mathbf{T}$ is the mean of the distribution and $B$ is the precision of the distribution.

The observation probability $p(o_{t+1}|x_{t+1}[i]=x[i])$ of Equation 18 is treated as a Gaussian and is computed from observation Equation 5 and the residual parameters $h$ and $D$ such that:

$$p(o_{t+1} \mid x_{t+1}[i] = x[i]) = N(o_{t+1}; S(x_{t+1}[i]) + h, D)$$

EQ. 20

Back tracing of the optimal quantization index $i'$ in equation 20 provides the initial VTR sequence 734.

To reduce the number of computations that must be performed, a pruning beam search may be performed instead of a rigorous Viterbi search. In one embodiment, an extreme form of pruning is used where only one index is identified for each frame.

After initial VTR sequence 734 has been identified at step 504, the initial VTR sequence is provided to a linear parameter estimator 736, which selects the parameters for the linear approximations of Equation 4 above at step 506. Specifically, for each frame, the initial VTR vector for the frame is used to determine the values of the linear parameters $\alpha_{kx}$, $\beta_{kx}$, $\gamma_{kx}$ and $\delta_{kx}$ for each vocal tract resonance index k and each LPC order n.

Under one embodiment, the values of linear parameters $\alpha_{kx}$ and $\beta_{kx}$ are determined for an LPC order n by applying bandwidth $b_k$ of the initial VTR vector to the exponent term $e^{-\pi n \frac{b_k}{f_s}}$ and evaluating the exponent. The linear segment of FIG. 3 that spans that value of the exponent is then selected, thereby selecting the linear parameters $\alpha_{kx}$ and $\beta_{kx}$ that define the linear segment. Note that each of these parameters is a vector that has a value of zero for every vector component except the vector component associated with bandwidth $b_k$.

Under one embodiment, the values of linear parameters $\gamma_{kx}$ and $\delta_{kx}$ are determined for an LPC order n by applying frequency $f_k$ of the initial VTR vector to the cosine term $\cos(2\pi n \frac{f_k}{f_s})$ and evaluating the cosine. The linear segment of FIG. 4 that spans that value of the cosine is then selected, thereby selecting the linear parameters $\gamma_{kx}$ and $\delta_{kx}$ that define the linear segment. Note that each of these parameters is a vector that has a value of zero for every vector component except the vector component associated with frequency $f_k$.

At step 508, the linear parameters for each frame are applied to Equation 4. Ignoring the incremental portion of the quadratic term in Equation 4, equation 4 is used in Equation 2. Equations 1 and 2 are then provided to a Kalman filter 738, which re-estimates the VTR vectors 734 for each frame. At step 510, the process determines if there are more iterations to be performed. If there are more iterations, the process returns to step 506, where the linear parameters are re-estimated from the new VTR vectors. The new linear parameters are then applied to Equation 2 through Equation 4 and Equations 1 and 2 are used in Kalman Filter 738 at step 508 to re-estimate the VTR vectors. Steps 506, 508 and 510 are iterated until a determination is made at step 510 that no further iterations are needed. At that point, the process ends at step 512 and the last estimation of VTR vectors 734 is used as the sequence of vocal tract resonance frequencies and bandwidths for the input signal.

Note that the Kalman Filter 738 provides continuous values for the vocal tract resonance vectors. Thus, the resulting sequence of vocal tract resonance frequencies and bandwidths is not limited to the discrete values found in VTR codebook 600.

Although the present invention has been described with reference to particular embodiments, workers skilled in the art will recognize that changes may be made in form and detail without departing from the scope of the invention.

**Claims**

1. A method of tracking vocal tract resonance frequency in a speech signal, comprising

   defining a state equation that is linear with respect to a past vocal tract resonance vector and that predicts a current vocal tract resonance vector;
   **characterized by**
   defining an observation equation that is linear with respect to a current vocal tract resonance vector and that predicts at least one component of an observation vector; and
   using the state equation, the observation equation, and a sequence of observation vectors to identify a sequence of vocal tract resonance vectors, each vocal tract resonance vector comprising at least one vocal tract resonance frequency.

2. The method of claim 1 wherein using the state equation, the observation equation, and the sequence of observation vectors to identify a sequence of vocal tract resonance vectors comprises applying the state equation, the observation equation and the sequence of observation vectors to a Kalman Filter.

3. The method of claim 1 wherein identifying a vocal tract resonance vector comprises identifying a vocal tract resonance vector from a continuous set of values.

4. The method of claim 1 wherein defining the observation equation comprises defining a linear approximation to a function that is non-linear with respect to the vocal tract resonance vector.

5. The method of claim 4 wherein defining the observation equation further comprises defining a linear approximation to the product of two functions that are each non-linear with respect to the vocal tract resonance vector.

6. The method of claim 5 wherein one of the functions that is non-linear with respect to the vocal tract resonance vector is an exponential function that is non-linear with respect to the bandwidth components of the vocal tract resonance vector.

7. The method of claim 5 wherein one of the functions that is non-linear with respect to the vocal tract resonance vector is a sinusoidal function that is non-linear with respect to the frequency components of the vocal tract resonance vector.

8. The method of claim 4 wherein defining a linear approximation comprises selecting a linear approximation from a set of linear approximations that together form a piecewise linear approximation to the non-linear function.

9. The method of claim 4 wherein defining a linear approximation comprises evaluating the non-linear function based on an estimate of a vocal tract resonance vector to produce a non-linear function value and using the non-linear function value to select parameters for the linear approximation.

10. The method of claim 9 wherein defining a linear approximation further comprises using the non-linear function value to select a linear approximation from a set of linear approximations that together form a piecewise linear approximation to the non-linear function.

11. The method of claim 1 further comprising:

    using the identified vocal tract resonance vectors to redefine the observation equation; and using the redefined observation equation, the state equation, and the observation vectors to identify a new sequence of vocal tract resonance vectors.

12. The method of claim 11 wherein redefining the observation equation comprises using an identified vocal tract resonance vector to select parameters for at least one linear approximation to a function that is non-linear with respect to a vocal tract resonance vector.

13. The method of claim 12 wherein using an identified vocal tract resonance vector to select parameters comprises evaluating the non-linear function using the vocal tract resonance vector to produce a non-linear function value and using the non-linear function value to select parameters for at least one linear approximation.

14. A computer-readable medium having computer-executable instructions for causing a computer to perform all the steps of the method of one of the claims 1 to 13 when said instructions are executed on the computer.


**Patentansprüche**

1. Verfahren zum Verfolgen von Vokaltrakt-Resonanzfrequenz in einem Sprachsignal, das umfasst:

   Definieren einer Zustandsgleichung, die in Bezug auf einen vergangenen Vokaltrakt-Resonanzvektor linear ist und einen aktuellen Vokaltrakt-Resonanzvektor vorhersagt;
   **gekennzeichnet durch**
   Definieren einer Beobachtungsgleichung, die in Bezug auf einen aktuellen Vokaltrakt-Resonanzvektor linear ist und die wenigstens eine Komponente eines Beobachtungsvektors vorhersagt; und
   Verwenden der Zustandsgleichung, der Beobachtungsgleichung und einer Sequenz von Beobachtungsvektoren, um eine Sequenz von Vokaltrakt-Resonanzvektoren zu identifizieren, wobei jeder Vokaltrakt-Resonanzvektor wenigstens eine Vokaltrakt-Resonanzfrequenz umfasst.

2. Verfahren nach Anspruch 1, wobei Verwenden der Zustandsgleichung, der Beobachtungsgleichung und der Sequenz von Beobachtungsvektoren zum Identifizieren einer Sequenz von Vokaltrakt-Resonanzvektoren Anwenden der Zustandsgleichung, der Beobachtungsgleichung und der Sequenz von Beobachtungsvektoren auf ein Kalman-Filter umfasst.

3. Verfahren nach Anspruch 1, wobei Identifizieren eines Vokaltrakt-Resonanzvektors Identifizieren eines Vokaltrakt-Resonanzvektors aus einem kontinuierlichen Satz von Werten umfasst.

4. Verfahren nach Anspruch 1, wobei Definieren der Beobachtungsgleichung Definieren einer linearen Näherung an eine Funktion umfasst, die in Bezug auf den Vokaltrakt-Resonanzvektor nicht linear ist.

5. Verfahren nach Anspruch 4, wobei Definieren der Beobachtungsgleichung des Weiteren Definieren einer linearen Näherung an das Produkt von zwei Funktionen umfasst, die beide in Bezug auf den Vokaltrakt-Resonanzvektor nicht linear sind.

6. Verfahren nach Anspruch 5, wobei eine der Funktionen, die in Bezug auf den Vokaltrakt-Resonanzvektor nicht linear sind, eine Exponentialfunktion ist, die in Bezug auf die Bandbreitenkomponenten des Vokaltrakt-Resonanzvektors nicht linear ist.

7. Verfahren nach Anspruch 5, wobei eine der Funktionen, die in Bezug auf den Vokaltrakt-Resonanzvektor nicht linear sind, eine Sinusfunktion ist, die in Bezug auf die Frequenzkomponenten des Vokaltrakt-Resonanzvektors nicht linear ist.

8. Verfahren nach Anspruch 4, wobei Definieren einer linearen Näherung Auswählen einer linearen Näherung aus einem Satz linearer Näherungen umfasst, die zusammen eine stückweise lineare Näherung an die nicht lineare Funktion bilden.

9. Verfahren nach Anspruch 4, wobei Definieren einer linearen Näherung Bewerten der nicht linearen Funktion auf Basis eines Schätzwertes eines Vokaltrakt-Resonanzvektors, um einen nicht linearen Funktionswert zu erzeugen, und Verwenden des nicht linearen Funktionswertes zum Auswählen von Parametern für die lineare Näherung umfasst.

10. Verfahren nach Anspruch 9, wobei Definieren einer linearen Näherung des Weiteren Verwenden des nicht linearen Funktionswertes zum Auswählen einer linearen Näherung aus einem Satz linearer Näherungen umfasst, die zusammen eine stückweise lineare Näherung an die nicht lineare Funktion bilden.

**11.** Verfahren nach Anspruch 1, das des Weiteren umfasst:

Verwenden der identifizierten Vokaltrakt-Resonanzvektoren, um die Beobachtungsgleichung neu zu definieren; und
Verwenden der neu definierten Beobachtungsgleichung, der Zustandsgleichung und der Beobachtungsvektoren, um eine neue Sequenz von Vokaltrakt-Resonanzvektoren zu identifizieren.

**12.** Verfahren nach Anspruch 11, wobei Neudefinieren der Beobachtungsgleichung Verwenden eines identifizierten Vokaltrakt-Resonanzvektors zum Auswählen von Parametern für wenigstens eine lineare Näherung an eine Funktion umfasst, die in Bezug auf einen Vokaltrakt-Resonanzvektor nicht linear ist.

**13.** Verfahren nach Anspruch 12, wobei Verwenden eines identifizierten Vokaltrakt-Resonanzvektors zum Auswählen von Parametern Bewerten der nicht linearen Funktion unter Verwendung des Vokaltrakt-Resonanzvektors zum Erzeugen eines nicht linearen Funktionswertes und Verwenden des nicht linearen Funktionswertes zum Auswählen von Parametern für wenigstens eine lineare Näherung umfasst.

**14.** Computerlesbares Medium, das durch Computer ausführbare Befehle aufweist, die einen Computer veranlassen, alle Schritte des Verfahrens nach einem der Ansprüche 1 bis 13 durchzuführen, wenn die Befehle auf dem Computer ausgeführt werden.

**Revendications**

**1.** Procédé de suivi de la fréquence de résonance d'appareil vocal dans un signal de parole, comprenant :

la définition d'une équation d'état qui est linéaire en ce qui concerne un vecteur de résonance d'appareil vocal passé et qui prédit un vecteur de résonance d'appareil vocal actuel ;
**caractérisé par**
la définition d'une équation d'observation qui est linéaire en ce qui concerne un vecteur de résonance d'appareil vocal actuel et qui prédit au moins une composante d'un vecteur d'observation ; et
l'utilisation de l'équation d'état, l'équation d'observation et une séquence de vecteurs d'observation pour identifier une séquence de vecteurs de résonance d'appareil vocal, chaque vecteur de résonance d'appareil vocal comprenant au moins une fréquence de résonance d'appareil vocal.

**2.** Procédé selon la revendication 1, dans lequel l'utilisation de l'équation d'état, de l'équation d'observation et de la séquence de vecteurs d'observation pour identifier une séquence de vecteurs de résonance d'appareil vocal comprend l'application de l'équation d'état, de l'équation d'observation et de la séquence de vecteurs d'observation à un filtre de Kalman.

**3.** Procédé selon la revendication 1, dans lequel l'identification d'un vecteur de résonance d'appareil vocal comprend l'identification d'un vecteur de résonance d'appareil vocal à partir d'un ensemble continu de valeurs.

**4.** Procédé selon la revendication 1, dans lequel la définition de l'équation d'observation comprend la définition d'une approximation linéaire à une fonction qui est non linéaire en ce qui concerne le vecteur de résonance d'appareil vocal.

**5.** Procédé selon la revendication 4, dans lequel la définition de l'équation d'observation comprend en outre la définition d'une approximation linéaire au produit de deux fonctions qui sont chacune non linéaires en ce qui concerne le vecteur de résonance d'appareil vocal.

**6.** Procédé selon la revendication 5, dans lequel une des fonctions qui est non linéaire en ce qui concerne le vecteur de résonance d'appareil vocal est une fonction exponentielle qui est non linéaire en ce qui concerne les composantes de largeur de bande du vecteur de résonance d'appareil vocal.

**7.** Procédé selon la revendication 5, dans lequel une des fonctions qui est non linéaire en ce qui concerne le vecteur de résonance d'appareil vocal est une fonction sinusoïdale qui est non linéaire en ce qui concerne les composantes de fréquence du vecteur de résonance d'appareil vocal.

8. Procédé selon la revendication 4, dans lequel la définition d'une approximation linéaire comprend la sélection d'une approximation linéaire à partir d'un ensemble d'approximations linéaires qui forment ensemble une approximation linéaire morceau par morceau de la fonction non linéaire.

9. Procédé selon la revendication 4, dans lequel la définition d'une approximation linéaire comprend l'évaluation de la fonction non linéaire sur la base d'une évaluation d'un vecteur de résonance d'appareil vocal pour produire une valeur de fonction non linéaire et l'utilisation de la valeur de fonction non linéaire pour sélectionner des paramètres pour l'approximation linéaire.

10. Procédé selon la revendication 9, dans lequel la définition d'une approximation linéaire comprend en outre l'utilisation de la valeur de fonction non linéaire pour sélectionner une approximation linéaire à partir d'un ensemble d'approximations linéaires qui forment ensemble une approximation linéaire morceau par morceau de la fonction non linéaire.

11. Procédé selon la revendication 1, comprenant en outre :

l'utilisation des vecteurs de résonance d'appareil vocal identifiés pour redéfinir l'équation d'observation ; et l'utilisation de l'équation d'observation redéfinie, de l'équation d'état et des vecteurs d'observation pour identifier une nouvelle séquence de vecteurs de résonance d'appareil vocal.

12. Procédé selon la revendication 11, dans lequel la nouvelle définition de l'équation d'observation comprend l'utilisation d'un vecteur de résonance d'appareil vocal identifié pour sélectionner des paramètres pour au moins une approximation linéaire d'une fonction qui est non linéaire en ce qui concerne un vecteur de résonance d'appareil vocal.

13. Procédé selon la revendication 12, dans lequel l'utilisation d'un vecteur de résonance d'appareil vocal identifié pour sélectionner des paramètres comprend l'évaluation de la fonction non linéaire en utilisant le vecteur de résonance d'appareil vocal pour produire une valeur de fonction non linéaire et l'utilisation de la valeur de fonction non linéaire pour sélectionner des paramètres pour au moins une approximation linéaire.

14. Support lisible par ordinateur comportant des instructions exécutables par ordinateur pour amener un ordinateur à effectuer toutes les étapes du procédé selon l'une des revendications 1 à 13 lorsque lesdites instructions sont exécutées sur l'ordinateur.

SYSTEM MEMORY 130

(ROM) 131

BIOS 133

(RAM) 132

OPERATING SYSTEM 134

APPLICATION PROGRAMS 135

OTHER PROGRAM MODULES 136

PROGRAM DATA 137

PROCESSING UNIT

VIDEO INTERFACE

195

OUTPUT PERIPHERAL INTERFACE

MONITOR 191

PRINTER 196

SPEAKERS 197

120

190

121

140

150

160

170

NON-REMOVABLE NON-VOL. MEMORY INTERFACE

REMOVABLE NON-VOL. MEMORY INTERFACE

USER INPUT INTERFACE

NETWORK INTERFACE

LOCAL AREA NETWORK

110

100

141

151

155

152

156

171

WIDE AREA NETWORK

MODEM 172

173

KEYBOARD 162

POINTING DEVICE 161

MICROPHONE 163

REMOTE COMPUTER 180

REMOTE APPLICATION PROGRAMS 185

OPERATING SYSTEM 144

APPLICATION PROGRAMS 145

OTHER PROGRAM MODULES 146

PROGRAM DATA 147

FIG. 1

FIG. 2

FIG. 3

FIG. 4

500 ——⟶ FORM VTR CODEBOOK

502 ——⟶ USE CODEBOOK ENTRIES AND
TRAINING FEATURE VECTORS TO
TRAIN RESIDUAL PARAMETERS

504 ——⟶ USE SIMULATED FEATURE VECTORS AND
RESIDUAL PARAMETERS TO IDENTIFY
INITIAL VTRS IN AN INPUT SIGNAL

506 ——⟶ FOR EACH FRAME, IDENTIFY
LINEAR APPROXIMATION BASED ON
VTR TO SELECT LINEAR
PARAMETERS

508 ——⟶ USE KALMAN FILTERING
RECURSION TO RE-
ESTIMATE VTRS

510 ——⟶ MORE ITERATIONS?

YES

NO

512 ——⟶ END

FIG. 5

SPEAKER

ADDITIVE NOISE — 614

612

MICROPHONE — 616

A/D — 618

FRAME CONSTRUCTOR — 620

600

VTR CODEBOOK x[i]

622

FFT — 624

602 — LPC-CEPSTRUM CALCULATION

LPC — 626

610

RECURSION — 628

SIMULATED FEATURE VECTORS S(x[i])

TRAINING FEATURE VECTORS — 630

632 — RESIDUAL PARAMETER TRAINER

634 — RESIDUAL PARAMETERS

FIG. 6

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **G. RIGOLL.** *International Conference on Acoustics, Speech, and Signal Processing ICASSP,* 11 April 1988, 306-310

- **DENG L et al.** Tracking vocal tract resonances using an analytical nonlinear predictor and a target-guided temporal constraint. *Proc. of Eurospeech,* 2003, 73-76